Europäisches Patentamt

European Patent Office

Office européen des brevets

(11) Veröffentlichungsnummer: **0 247 406**
**B1**

(12) **EUROPÄISCHE PATENTSCHRIFT**

(45) Veröffentlichungstag der Patentschrift: **08.08.90**

(21) Anmeldenummer: **87106633.8**

(22) Anmeldetag: **07.05.87**

(51) Int. Cl.⁵: **A 47 J 27/092, A 47 J 27/08**

(54) Dampfdruckkochtopf mit einer den Topfinnenraum gegen Druckabfall sichernden Dichtung.

(30) Priorität: **30.05.86 DE 3618269**

(43) Veröffentlichungstag der Anmeldung:
**02.12.87 Patentblatt 87/49**

(45) Bekanntmachung des Hinweises auf die
Patenterteilung:
**08.08.90 Patentblatt 90/32**

(84) Benannte Vertragsstaaten:
**AT BE CH DE ES FR GB GR IT LI LU NL SE**

(56) Entgegenhaltungen:
**EP-A-0 108 203**
**WO-A-82/02699**
**CH-A-506 279**
**FR-A-2 414 318**

(73) Patentinhaber: **Boehm, Hans-Georg, Dr. rer. nat.**
**Kellergrundweg 13**
**D-6242 Kronberg/Ts (DE)**

(72) Erfinder: **Boehm, Hans-Georg, Dr. rer. nat.**
**Kellergrundweg 13**
**D-6242 Kronberg/Ts (DE)**

(74) Vertreter: **Eisenführ, Speiser & Strasse**
**Martinistrasse 24**
**D-2800 Bremen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft einen Dampfdruckkochtopf.

Im Inneren eines Dampfdruckkochtopfes besteht nach seiner Erhitzung ein Überdruck. Bei modernen Dampfdruckkochtöpfen kann mit einer Hand sowohl der Überdruck (durch Öffnen der Dichtung) gefahrlos abgelassen, als auch der Deckel entriegelt und abgehoben werden.

Bei dem aus der WO—A—82 02 699 bekannten, im Patentanspruch 1 berücksichtigten Dampfdruckkochtopf ist die Dichtung mit radialen Rippen versehen, die im Schließzustand funktionslos sind, aber beim Niederdrücken des Deckels hebellagerartig die Dichtung vom Behälter bzw. vom Deckel abheben. So kann der Überdruck einhändig abgelassen werden.

Nachteilig ist bei diesem bekannten Dampfdruckkochtopf, die die Verdrehung des niedergedrückten Deckels erheblich Kraft erfordert, weil dabei die Radialrippen, gegen den Behälter bzw. den Deckel gepreßt, senkrecht zu ihrer Längserstreckung gleiten müssen und die Rippen aus dem wenig glütfähigen Elastomer material der Dichtung bestehen. Dies erschwert die Bedienung erheblich. Auch unterliegt die Dichtlippe dabei der Abnutzung und möglicherweise Beschändigung, da sich die Belastung auf kleine Auflageflächen konzentriert.

Aufgabe der Erfindung ist es, einen solchen einhändig bedienbaren Dampfdruckkochtopf zu schaffen, der leichter zu öffnen ist und dessen Dichtung geringerer Abnutzung unterliegt.

Zur Lösung dieser Aufgabe weist der Dampfdruckkochtopf erfindungsgemäß die im Patentanspruch 1 definierten Merkmale auf.

Vorteilhafte Ausgestaltungen sind in den Unteransprüchen beschrieben.

Der erfindungsgemäße Dampfdruckkochtopf ist wegen seines einfachen Aufbaus ohne großen Aufwand herstellbar. Das Gleitelement stütz bei geschlossenem Topf die Dichtlippe ab. Es hebt vor dem Öffnen die Dichtlippe vom Deckel bzw. vom Behälter ab und ermöglicht so ein rasches Entweichen des Überdruckes. Gleitelement und Dichtlippe werden bei ihrem Zusammenwirken kaum und nur über eine größere Beruhrungsfläche verteilt beansprucht, so daß die Abnutzung gering bleibt. Bie einer Dichtung mit zwei Dichtlippen, die am Deckel bzw. am Behälter anliegen, kann das Gleitelement nach Wahl mit einer von beiden kombiniert werden. Der Dampfdruckkochtopf kann zylindrisch oder mit rechtekiger Grundfläche ausgebildet werden.

Gleich, ob die Trennung von Deckel und Behälter durch eine Verdrehung des Deckels gegenüber einem zylindrischen Behälter oder durch horizontales Abschieben des Deckels von einem rechtekigen Behälter erfolgt, erleichtert das Gleitelement die Deckelbewegung und vermeidet eine Abnutzung der — dann vollständig abgehobenen — Dichtlippe.

Im folgenden werden bevorzugte Ausführungsformen der Erfindung anhand der beigefügten Zeichnungen erläutert.

Es zeigen:

Fig. 1 eine erste Ausführungsform des Dampfdruckkochtopfes von unten in verriegeltem Zustand;

Fig. 2 einen Vertikalschnitt des Dampfdruckkochtopfes entlang der Linie A—A in Figur 1;

Fig. 3 den Dampfdruckkochtopf von unten in entriegeltem Zustand;

Fig. 4 einen Vertikalschnitt entlang der Linie B—B in Figur 3 bei neidergedrücktem Deckel;

Fig. 5 de Dampfdruckkochtopf von unten bei lose aufgelegtem Deckel;

Fig. 6 einen Vertikalschnitt entlang der Linie C—C in Figur 5;

Fig. 7 einen weggebrochenen Teilschnitt einer zweiten Ausführungsform des Dampfdruckkochtopfes in verriegeltem Zustand;

Fig. 8 einen entsprechenden Teilschnitt des entriegelten Dampfdruckkochtopfes bei niedergedrücktem Deckel;

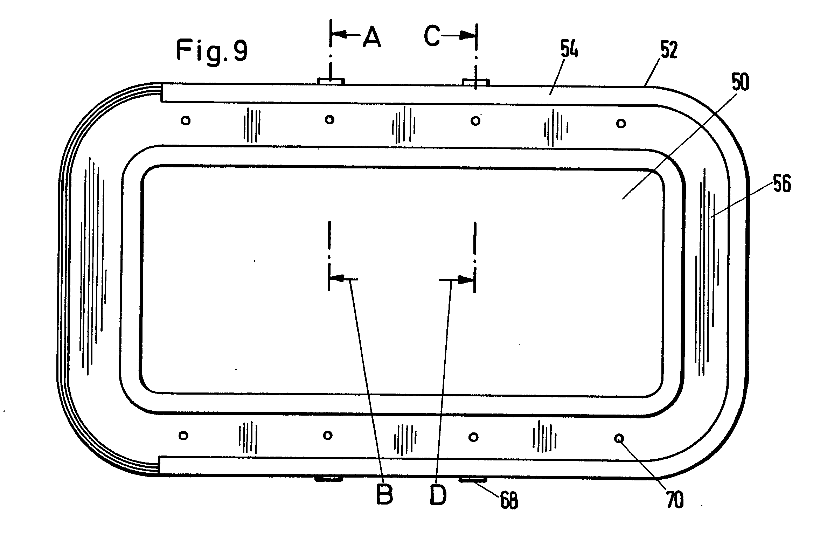

Fig. 9 eine Ansicht einer dritten Ausführungsform des Dampfdruckkochtopfes von unten in geschlossenem Zustand;

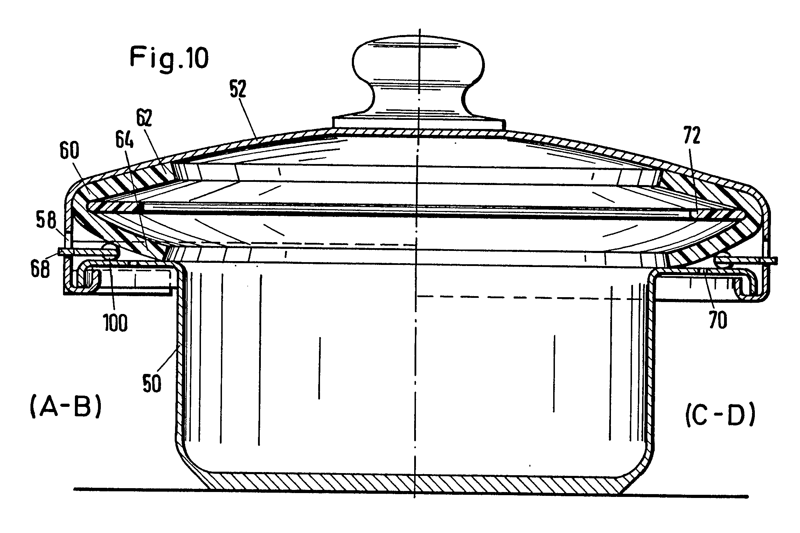

Fig. 10 Teilschnitte gemäß den Linien A—B und C—D in Fig. 9;

Fig. 11 eine Ansicht entsprechend Fig. 9 bei teilweise abgeschobenem Deckel und

Fig. 12 Teilschnitte gemäß den Linien A—B und C—D in Fig. 11.

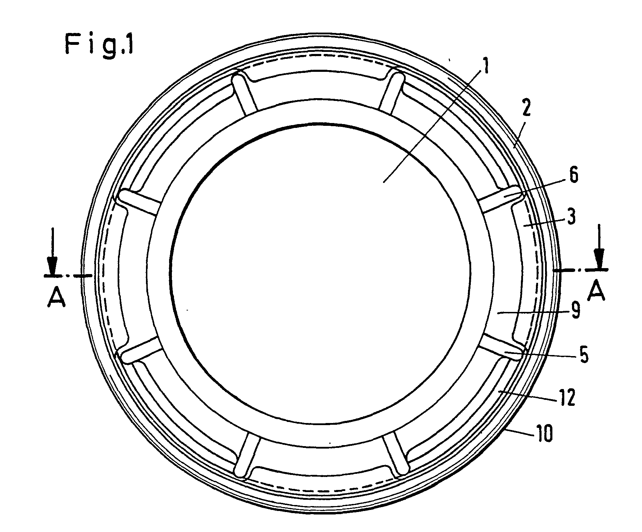

Figuren 1 bis 6 zeigen einen oben offenen Kochgutbehälter 1 mit duchgehendem Behälterrand 9, von dessen Umfang segmentartige Randvorsprünge 4 radial auswärts vorspringen.

Über den Umfang verteilt erstrecken sich unterhalb des Behälterrandes 9 alternierend Sperren 5 und Anschläge 6 abwärts und radial auswärts bis nahe der Außenkante der Randvorsprünge 4. Die radiale Erstreckung der Sperren 5 und Anschläge 6 ist im wesentlichen gleich (Figuren 1, 3 und 5); die Sperren 5 erstrecken sich aber weniger weit abwärts als die Anschläge 6.

Die Sperren 5 und Anschläge 6 liegen jeweils an den Umfangsenden der Randvorsprünge 4. Sie bilden, zusammen mit später beschriebenen komplementären Einrichtungen des Deckels, eine Schließeinrichtung.

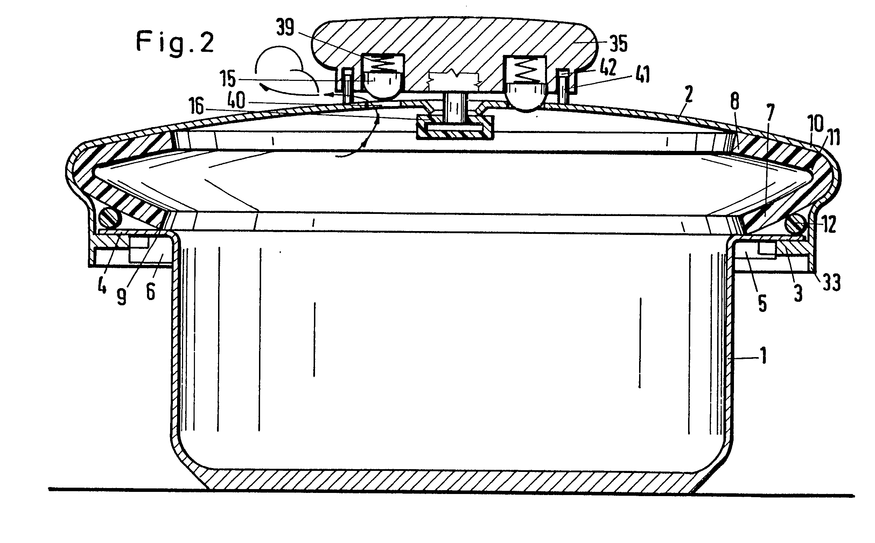

Dere Deckelrand 10 eines Deckels 2 (Figuren 2, 4 und 6) ragt allseitig über den Kochgutbehälter 1 hinaus. Der Deckel 2 wölbt sich auswärts leicht abwärts bis zum Deckelrand 10 und dann einwärts zur Bildung einer einwärts offenen Rinne zur Aufnahme der noch zu beschreibende Dichtung 11.

Unterhalb des einwärts gewölbten Bereichs des Deckelrandes 10 erstreckt sich ein ringartiger gerader Stegbereich 33 abwärts vom Deckelrand 10.

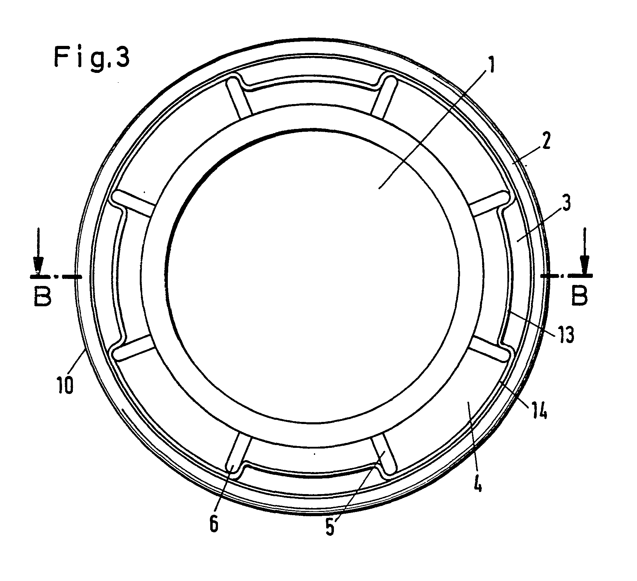

Vom Stegbereich 33 stehen Deckelrandvorsprünge 3 radial einwärts vor und bilden Kreisscheibensegmente, die den Behälterrandvorsprüngen 4 komplementär ähnlich sind. Wenn jeder Deckelrandvorsprung 3 in einer Randlücke 13 zwischen zwei Behälterrandvorsprüngen 4 liegt (Fig. 3), können die Deckelrandvorsprünge 3 abwärts zwischen den Behälterrandvorsprüngen 4 hindurchtreten.

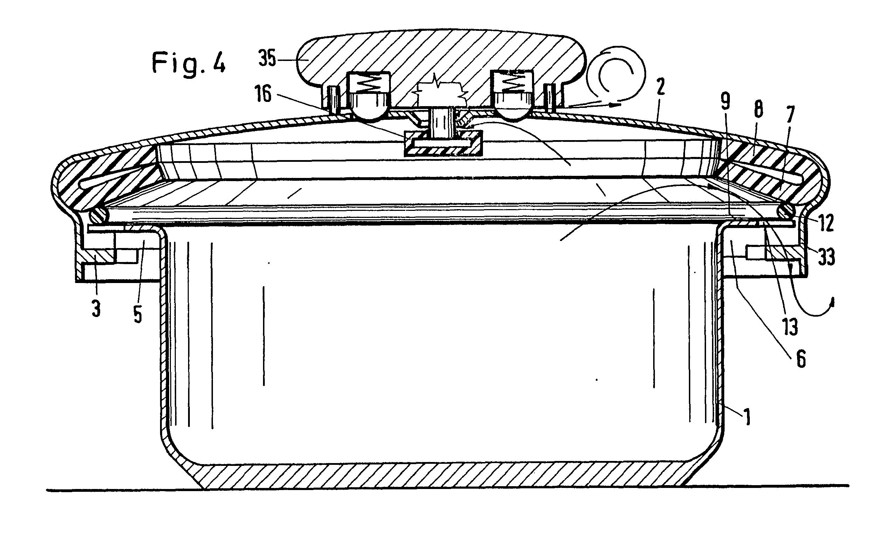

Beim Neiderdrücken des Deckels 2 werden dessen Randvorsprünge 3 über die Unterkanten der Sperren 5 hinaus bewegt, so daß der Deckel 2 gegenüber dem Kochgutbehälter 1 verdrehbar ist. Auf der linken Seite in Fig. 4 ist erkennbar, daß dann die Deckelrandborsprünge 3 mit ihrer Oberseite an der Unterseite der Sperren 5 anliegen. Auf der rechten Seite der Figur ist erkennbar, daß die gegenüber den Sperren 5 größere Abwärtserstreckung der Anschläge 6 die Verdrehung des Deckels 2 begrenzt.

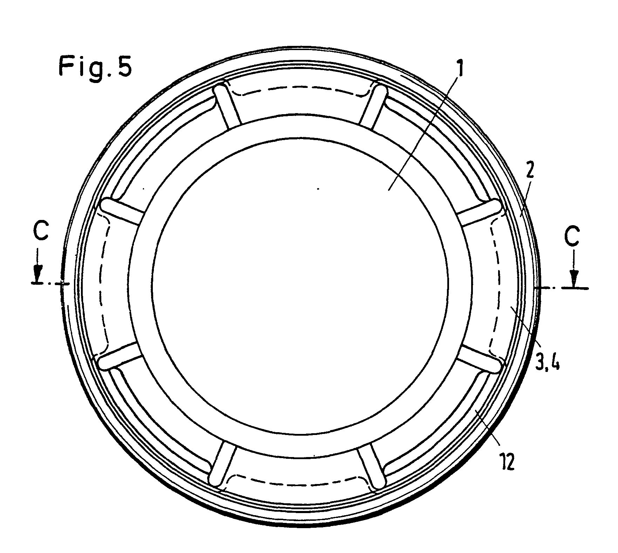

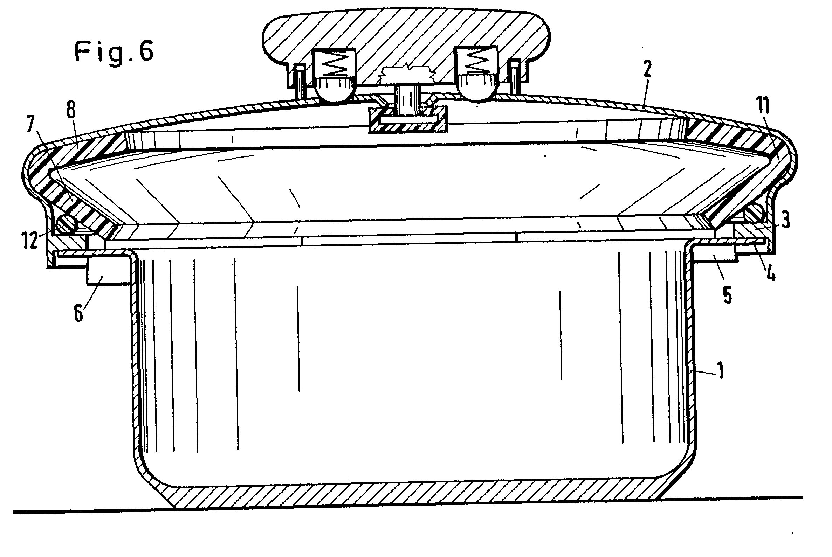

Der Deckel 2 wird zunächst, wie in Fig 5 und 6 gezeigt, in beliebiger Stellung auf den Rand des Kochgutebehälters 1 aufgelegt. Die Deckelrandvorsprünge 3 liegen auf der vom Boden des Kochgutbehälters 1 abgewandten Oberseite der Behälterrandvorsprünge 4 auf. Jetzt wird der Deckel 2 verdreht, bis die Deckelrandvorsprünge 3 in den Randlücken 13 liegen (Fig. 3) und dann niedergedrückt (Fig. 4). Dann wird weiter verdreht, bis die Deckelrandvorsprünge 3 seitlich an den Anschlägen 6 anliegen. Wie Fig. 1 und 2 ziegen, kann sich beim Loslassen der Deckel begrenzt aufwärts bewegen, bis die Deckelrandvorsprünge 3 an den Behälterrandvorsprüngen 4 in Anlage kommen (Fig. 2). Dies ist die Betriebsstellung der Schließeinrichtung des Dampfdruckkochtopfes.

Zur Eintriegelung des Deckels 2 wird der soeben beschriebene Vorgang umgekehrt durchgeführt.

Der Deckel 2 weist eine Dichtung 11 auf, die — radial einwärts — im Querschnitt V-förmig ist und so zwei Dichtlippen 7, 8 bildet. Die Dichtung 11 erstreckt sich als geschlossenes, im wesentlichen kreisförmiges Profil über den gesamten Umfang des Deckelrandes 10. Ihre eine, obere Dichtlippe 8 liegt flächig an der Unterseite des Deckels 2 an, während ihre andere, untere Dichtlippe 7 bei angenommenem Deckel 2 vom Deckelrand 10 her einwärts und abwärts geneigt frei vorsteht. Das freie Ende dieser unteren Dichtlippe 7 liegt bei aufgesetztem Deckel 2 auf dem Behälterrand 9 des Kochgutbehälters 1 auf und dichtet den Deckel 2 gegenüber dem Kochgutbehälter 1 ab.

Unterhalb der unteren Dichtlippe 7 liegt als Gleitelement 12 ein geschlossener Ring aus einem Werkstoff, welcher mit dem Behälter 1 bzw. Deckel 2 eine Gleitpaarung von möglichst geringem Reibbeiwert ergibt, beispielsweise aus Metall oder aus hartem Kunststoff. Die Dichtung besteht bespielsweise aus einem Nitrilkautschuk-Elastomeren (NBR-Elastomeren) oder Synthesekautschuk, etwa Silikonkautschuk.

Der Gleitelement-Außendurchmesser ist fast so groß wie der Innendurchmesser des Stegbereichs 33. Dadurch kann das Gleitelement 12 aus seiner Stellung zwischen Dichtlippe 7, Stegbereich 33 und Deckelrandvorsprüngen 3 nicht herausrutschen.

Wird der beispielsweise gemäß Figuren 5 und 6 locker aufgelegte Deckel in die in Figuren 3 und 4 gezeigte Stellung gebracht, in welcher die Behälterrandvorsprünge 4 in die Randlücken 14 des Deckelrandes 10 eintreten, gerät das Gleitelement 12 in Berührung mit de Behälterrandvorsprüngen 4. Beim Niederdrücken des Deckels 2 wird es von diesen gehalten und aus seiner Anlage an den Deckelrandvorsprüngen 3 abgehoben.

Durch die hebellagerartige Relativstellung des Gleitelementes 12 zur Unterseite der unteren Dichtlippe 7 wird die Dichtlippe 7 beim Niederdrücken des Deckels 2 hochgeschwenkt (Fig. 4). Diese Bewegung der Dichtlippe 7 kann bis zur Anlage an der Unterseite der oberen Dichtlippe 8 gehen.

Die Federkraft der Dichtung 11 würde das Verdrehen des Deckels 2 wesentlich erschweren, wenn die Dichtlippe 7 dabei am Behälterrand 9 anläge. Die wesentlich geringere Reibung zwischen dem Gleitelement 12 und dem Behälterrand 9 erleichtert die Drehung des Deckels 2 wesentlich; da zudem die Dichtlippe 7 vollständig vom Behälterrand 9 weggeschwenkt wird, ist die Reibung zwischen dem Gleitelement 12 und dem Behälterrand 9 die einzige Gegenkraft beim Verdrehen des Deckels 2.

Aufgrund der relativ hohen Steifheit des Gleitelementes 12 kann dieses im Bereich der Randlücken 13 die untere Dichtlippe 7 abstützen, ohne selbst unterseitig abgestützt werden zu müssen. Das Gleitelement 12 trägt daher dazu bei, eine übermäßige Deformierung der Dichtlippe 7 in diesem Bereich zu verhindern, die zum Undichtwerden des Dampfdruckkochtopfes führen könnte.

Bei Überdruck im Dampfdruckkochtopf wird die Dichtlippe 7 so stark gegen den Behälterrand 9 gepreßt, daß, zusammen mit der Druckeinwirkung auf die Unterseite des Deckels 2 und der verdrehungshindernden Wirkung der Sperren 5 und Anschläge 6, eine Verdrehung des Deckels 2 bei anstehendem Überdruck unmöglich ist.

Ein em Knopfgriff 35 des Deckels 2 angeordnetes Sicherheitsbentil begrenzt den Überdruck und umfaßt eine Ventilöffnung 40, die einen Sitz für einen Ventilkörper 15 bildet. Der Ventilkörper 15 ist in einer vertikalen Sackbohrung des Knopfgriffes 35 verschieblich geführt und wird von einer Feder 39 zur Ventilöffnung 40 des Deckels 2 hingedrängt. Die Federkraft der Feder 39 ist auf den gewünschten Betriebs-Überdruck abgestimmt.

Der Knopfgriff 35 ist unterseitig mit Bohrungen 42 versehen, in die am Deckel 2 befestigte Mitnehmerzapfen 41 eingreifen. Diese Bohrungen 42 sind, genau wie die den Ventilkörper 15 aufnehmenden Bohrungen, exzentrisch zur Mittelachse des Knopfgriffes 35 angeordnet.

Zentrisch zur Mittelachse des Knopfgriffes 35 trägt diese einen Fortsatz 16, der durch eine mittige Öffnung des Deckels 2 ragt. Unter Zwischenschaltung eines geeigneten Dichtringes bildet der Fortsatz 16 des Knopfgriffes 35 mit der Unterseite des Deckels 2 ein Dampfdruck-Ablaßventil, welches durch Drücken auf den Knopfgriff 35 geöffnet werden kann.

Ist der Kochvorgang beendet, wird der Knopfgriff 35 niedergedrückt. Dabei entweicht zunächst ein Teil des Überdruckes durch das Ablaßventil 16 (Figur 4). Bei weiterem Druck auf den Knopfgriff 35 wird der ganze Deckel 2 niedergedrückt. Dabei wird die untere Dichtlippe 7 hebelartig um ihren Auflagepunkt am Gleitelement 12 aufwärts geschwenkt; der restliche Überdruck kann durch die Randlücken 13, 14 entweichen. Da hierfür ein, gemessen am Ablaßventil, sehr großer Querschnitt zur Verfügung steht, wird der Dampfdruckkochtopf sehr schnell völlig drucklos. Nachfolgend kann der Deckel 2 verdreht und eintriegelt werden.

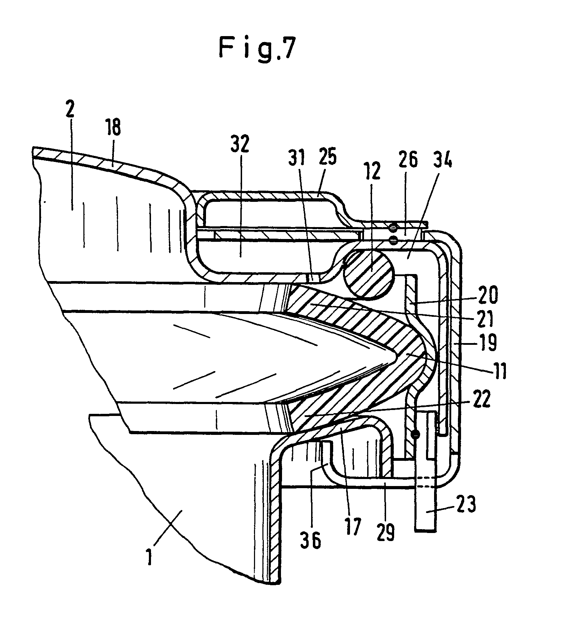

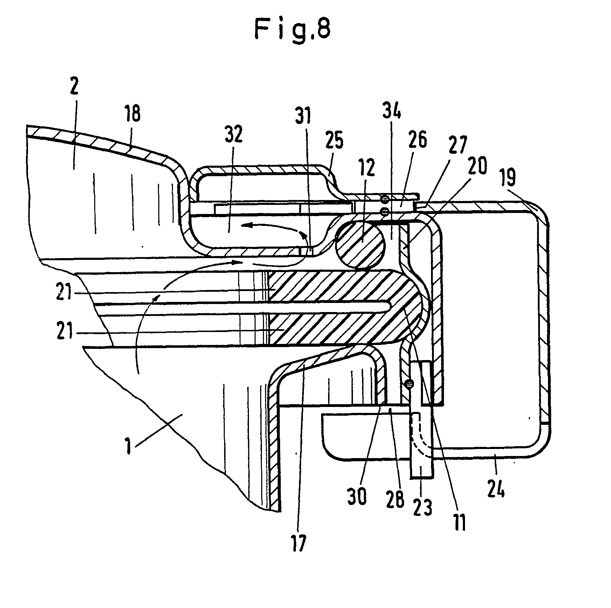

· Eine zweite bevorzugte Ausführungsform des Dampfdruckkochtopfes ist in Figuren 7 und 8 gezeigt. Der Kochgutbehälter 1 weist einen umlaufenden, glatten Behälterrand 17 auf. Ein Deckel 2 umfaßt eine seinen Hauptkörper bildende Haube 18. An ihrem Außenumfang weist die Haube 18 eine nach oben offene, im Querschnitt etwa rechteckige Nut 32 auf, die von einer nach unten offenen zweiten Nut 34 radial auswärts umschlossen wird. Am Außenrand des Deckels 2 liegt ein Rahmenring 20 in Form eines senkrechten, zum Ring geschlossenen Blechstreifens mit einer in dessen Höhenmitte eingeprägten, radial auswärts gewölbten Ringnut zur Halterung des Außenumfanges einer Dichtung 11, die der bereits beschriebenen entspricht. Über die Unterkante des Rahmenringes 20 stehen Finger 23 abwärts vor.

Auf der Oberseite der Haube 18 erstreckt sich unverschieblich ein Abdeckring 25 in radial auswärtiger Richtung über beide Nuten 32, 34 hinweg.

Zwischen dem Abdeckring 25 und der Haube 18 sind, in Umfangsrichtung des Deckels 2 voneinander beabstandet, Klammern 19 vorgesehen, di gegenüber dem Deckel 2 in dessen radialer, wie auch in Umfangsrichtung beweglich sind.

In Schlitzen 27 der Klammern 19 liegen Gleitsteine 26, die zwischen dem Boden der zweiten Nut 34 und dem Abdeckring 25 gehalten sind. An der Unterkante der Klammern 19 setzt ein horizontaler Riegelbereich 29 an.

Am radial einwärtigen Ende des Riegelbereichs 29 hintergreift ein Steg 36 in der Verriegelungsstellung des Deckels den Außenrand des Behälterrandes 17.

Der Riegelbereich 29 weist eine Schlitz 24 auf, durch den sich ein Finger 23 des Rahmenringes 20 erstreckt. Dadurch kann sich die Klammer 19 nur radial verschieben.

Wie insbesondere Figur 7 zeigt, liegt die Dichtung 11, mit einer oberen Dichtlippe 21 an der Unterseite der Haube 18 an. Radial auswärts von der Kontaktstelle zwischen der oberen Dichtlippe 21 und diesem Bereich ist eine Haubenöffnung 31 vorgesehen. In der zweiten Nut 34 liegt ein Gleitelement 12. Das Gleitelement 12 wird durch die radial einwärtige Wand und den Boden der zweiten Nut 34, durch den Rahmenring 20 und die Oberseite der oberen Dichtlippe 21 in seiner Stellung gehalten.

Im Betriebszustand steht ein innerer Überdruck an, dessen Entweichen die Dichtung 11 verhindert. Die obere Dichtlippe 21 wird gegen eine übermäßige Verformung durch das Gleitelement 12 abgestützt, die untere Dichtlippe 22 durch die Schrägneigung des Behälterrandes 17.

Die Klammer 19 liegt in ihrer am meisten radial einwärts verschobenen Stellung, die Oberseite ihres Riegelbereichs 29 liegt an der Unterkante 30 des sich am Außenrand des Behälterrandes 17 abwärts erstreckenden Steges.

Durch den Innendruck sowie durch die Dichtung 11 wird der Deckel 2 vom Kochgutbehälter 1 weggedrängt; diese Bewegung wird durch die Anlage von Riegelbereich 29 und Unterkante 30 begrenzt.

Nach Beendigung des Garvorganges wird der Dampfdruckkochtopf zunächst wie bei der ersten Ausführungsform teilweise drucklos gemacht. Beim weiteren Niederdrücken hebelt das Gleitelement 12 die obere Dichtlippe 21 von der Haube 18 ab, wie Figur 8 zeigt. So kann der restliche Innendruck durch die Haubenöffnungen 31 entweichen.

Beim nachfolgenden Drehen des Deckels 2 gegenüber dem Kochgutbehälter 1 gleitet die Haube 18 auf dem Gleitelement 12, welches dieser Gleitbewegung nur eine geringe Reibkraft entgegensetzt. Hingegen verbleibt die Dichtung 11 wegen der größeren Reibhaftung zwischen der unteren Dichtlippe 22 und dem Behälterrand 17 diesem gegenüber unverdreht und hält ihrerseits das Gleitelement 12 fest.

Da die Dichtung 11 nicht verdreht wird, wird auch der flächig an ihn anliegende Rahmenring 20 nicht mit verdreht. Die Finger 23 hindern die Klammern 19 an einer Verdrehung gegenüber dem Kochgutbehälter 1, so daß sich insgesamt eine Verdrehung von Haube und Abdeckring 25 gegenüber der Gesamtheit von Kochgutbehälter 1, Dichtung 11, Rahmenring 20, Klammern 19 und Gleitelement 12 ergibt. Bei dieser Relativbewegung gleiten die Gleitsteine 26 in den Schiltzen 27 und schieben die Klammer 19 auswärts.

Jetzt kann die gesamte Dichtungsanordnung zusammen mit dem Deckel 2 abgehoben werden; die Halterung der Dichtung 11 am Rahmenring 20 verhindert deren Herausfallen. Eine Entriegelung der Schließeinrichtung bei im Topfinneren anstehendem Überdruck ist ausgeschlossen.

Sind Deckel 2 und Kochgutbehälter 1 miteinander nicht vollständig verriegelt, stehen die Oberkanten 28 der Stege 36 der Klammern 19 im Eingriff mit den Unterkaten 30 des Steges am Behälterrand 17. Dadurch wird der Deckel 2 so weit zum Kochgutbehälter 1 hin gezogen, daß die obere Dichtlippe 21 in ihere abgehobenen Stellung ist und sich kein Überdruck im Topf aufbauen kann. Die Katen 28, 30 wirken daher wie die Sperren 5 des ersten Ausführungsbeispiels.

Eine dritte bevorzugte Ausführungsform umfaßt einen rechteckigen Kochgutbehälter 50 mit rechteckigem Deckel 52. Der Deckel 52 ist in Längsrichtung des Kochgutbehälters 50 auf diesen aufschiebbar bzw. von diesem abschiebbar und wird durch einen Horizontalsteg 54 am Behälter gehalten, der den Behälterrand 56 untergreift.

Ein solcher Topf ist beispielsweise aus der DE—PS 28 01 173 bekannt.

Eine Dichtung 60 ist durch eine Stützelement 72 am Deckel 52 festgeklemmt, welches zwischen zwei Dichtlippen 62, 64 liegt. Unter der unteren Dichtlippe 64 liegt ein Gleitelement 100 mit seitlichen Ansätzen 68, die zungenförmig durch Schlitze 58 im Rand des Deckels 52 auswärts vorragen und das Gleitelement 100 halten. Dichtung 60 und Gleitelement 100 folgen der Rechteckkontur des Deckels 52. Materialsteifheit und Halterung des Gleitelementes 100 durch die Ansätze 68 sind so bewählt, daß die untere Dichtlippe 64 bei aufgeschobenem Deckel am Behälterrand 56 anliegen kann, andererseits aber ein leichtes Anschnäbeln des Deckels 52 am Behälter 50 erfolgen kann.

Die Dichtfunktion des Dampfdruckkochtopfes im Betrieb entspricht ganz der bereits beschriebenen. Im Betriebszustand verhindert die Anlage der unteren Dichtlippe 64 am Behälterrand 56 ein Entweichen des Innendruckes.

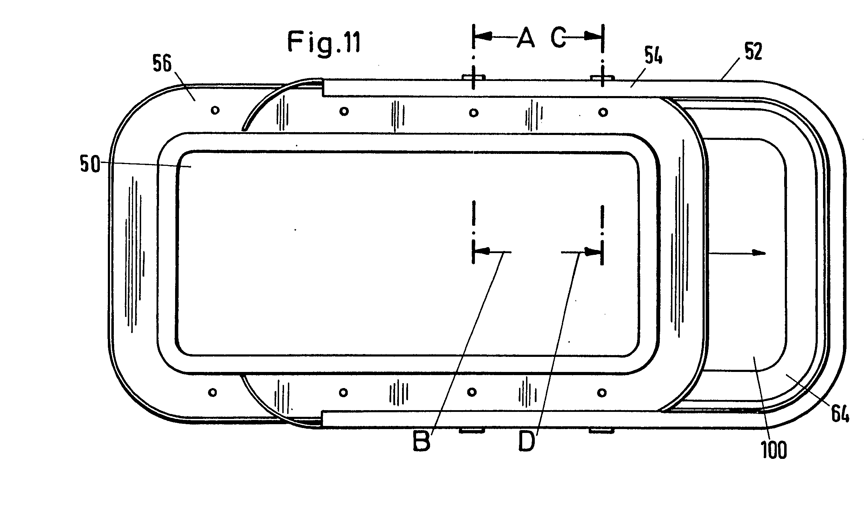

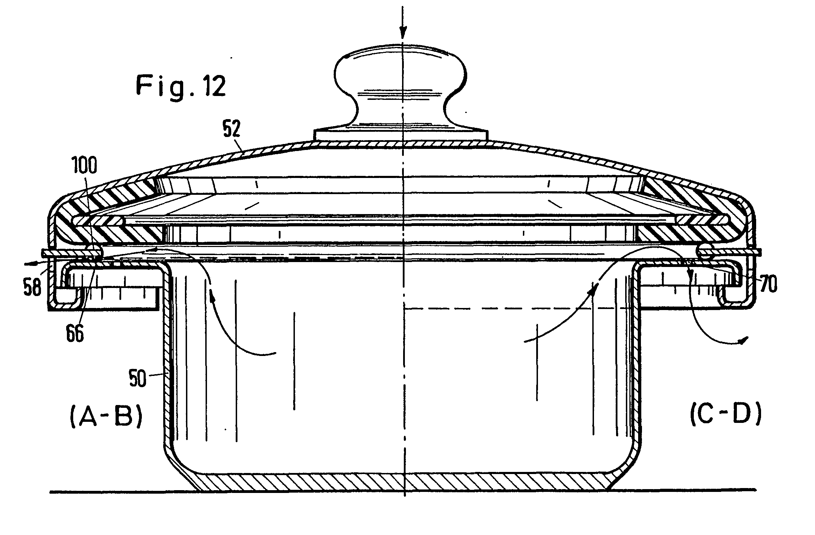

Zum Öffnen wird der Deckel 52 — nach Betätigung eines nicht gezeigten Ablaßventils — niedergedrückt und die untere Dichtlippe 64 vom Behälterrand 56 abgehoben, wobei das Gleitelement 100 als Hebellager dient. Der Restdampf kann durch Öffnungen 70 im Behälterrand 56 entwichen (Fig. 12). Das Gleitelement 100 ist zudem auf seiner von der unteren Dichtlippe 64 abgewandten Seite mit Aussparungen 66 versehen, die zusammen mit den Schlitzen 58 eine weitere Möglichkeit des Dampfaustrittes bilden. In niedergedrückter Stellung kann der Deckel 52 dann, wie Figuren 11 und 12 zeigen, vollständig vom Kochgutbehälter 50 abgeschoben werden.

Bei allen Ausführungsbeispielen kann das Gleitelement in die Dichtung integriert sein, beispielsweise durch Ankleben, Anvulkanisieren oder teilweises Umspritzen oder gar einstückiges Herstellen. Ferner ist es möglich, das Gleitelement durch eine funktionsmäßig entsprechende, hebellagerartig wirkende Ausformung (Wulst) am Deckel oder Behälterrand zu ersetzen.

## Patentansprüche

1. Dampfdruckkochtopf aus einem Kochgut aufnehmenden Behälter (1; 17; 50), einem darauf aufsetzbaren Deckel (2; 18) mit Sicherheitsventil, einer Behälter und Deckel im Schließzustand aneinander festlegenden Schließeinrichtung und einer zwischen Deckel und Behälter angeordneten, im Schließzustand den Topfinnenraum gegen Druckabfall sichernden Dichtung, wobei eine radial einwärtsweisende Dichtlipee (7; 21; 64) der Dichtung am Deckel oder am Behälter anliegt, die beim Niederdrücken des Deckels in Richtung auf den Behälter mittels eines hebelartigen Elements (12; 100) aus der dichtenden Anlage am Deckel oder am Behälter abhebt und wobei der Deckel oder der Behälter beim anschließenden Bewegen des Deckels in die Öffnungsstellung eine Relativbewegung zur Dichtlippe ausführt, dadurch gekennzeichnet, daß zwischen der Dichtlippe (7; 21; 64) und dem Deckel (2; 18) oder dem Behälter (1; 17; 50) ein ringartiges Gleitelement (12; 100) radial außerhalb des Randes der Dichtlippe (7; 21; 64) angeordnet ist, welches aus einem Werkstoff besteht, der mit dem Behälter bzw. Deckel eine Gleitpaarung von geringem Reibbeiwert ergibt und das Hebellager bildet.

2. Dampfdruckkochtopf nach Anspruch 1, dadurch gekennzeichnet, daß das ringartige Gleitelement (12; 100) entlang dem gesamten Rand (9; 50 bzw. 10) des Behälters (1; 50) und/oder des Deckels (2; 18) angeordnet ist.

3. Dampfdruckkochtopf nach Anspruch 1 oder 2, dadurch gekennzeichnet, daß das Gleitelement (12; 100) einen kreisrunden Querschnitt aufweist.

4. Dampfdruckkochtopf nach einem' der Ansprüche 1 bis 3, dadurch gekennzeichnet, daß die Dichtung (11; 60) aus einem Nitrilkautschuk-Elastomeren (NBR-Elastomeren) oder Silikonkautschuk und das Gleitelement aus rostfreiem Stahl oder Kunststoff besteht.

5. Dampfdruckkochtopf nach einem der. Ansprüche 1 bis 4, dadurch gekennzeichnet, daß das Gleitelement in die Dichtung integriert ist.

6. Dampfdruckkochtopf nach einem der Ansprüche 1 bis 5, dadurch gekennzeichnet, daß die Oberfläche des Gleitelements (12; 100) in streigen -oder punktförmige Vorsprünge aufgelöst ist.

7. Dampfdruckkochtopf nach einem der Ansprüche 1 bis 6, dadurch gekennzeichnet, daß das Gleitelement (12; 100) radial außerhalb von im Behälterrand (56) oder im Deckel (2) vorgesehenen Öffnungen (70; 31) angeordnet ist, die radial außerhalb der freien Endkante der zugeordneten Dichtlippe (64) liegen.

8. Dampfdruckkochtopf nach einem der Ansprüche 1 bis 7, dadurch gekennzeichnet, daß das Gleitelement (100) mit auswärts vortretenden Ansätzen (68) in Schiltze (58) des Deckels (52) eingreift.

9. Dampfdruckkochtopf nach einem der Ansprüche 1 bis 8, dadurch gekennzeichnet, daß zwischen den Dichtlippen (62, 64) ein flaches Stützelement (72) angeordnet ist.

10. Dampfdruckkochtopf nach Anspruch 1, dadurch gekennzeichnet, daß das Gleitelement aus einer hebellagerartigen Ausformung des Deckels bzw. Behälterrandes besteht.

11. Dampfdruckkochtopf nach einem der Ansprüche 1 bis 10, dadurch gekennzeichnet, daß das Gleitelement (12; 100) an seiner von der zugeordneten Dichtlippe (64) abgewandten Seite mit Aussparungen (66) versehen ist.

## Revendications

1. Marmite à pression constituée d'un récipient (1, 17, 50) recevant les denrées à cuire, un couvercle (2, 18) qui peut être posé dessus et qui comporte une soupape de sécurité, d'un dispositif de fermeture fixant l'un à l'autre à l'état fermé le récipient et le couvercle, et d'un joint d'étanchéité qui est agencé entre le couvercle et le récipient et qui, à l'état fermé, préserve d'une chute de pression l'espace interne de la marmite, une lèvre d'étanchéité (7, 21, 64) de joint d'étanchéité qui pointe radialement vers l'intérieur étant en appui sur le couvercle ou sur le récipient et se détachant au moyen d'un élément en forme de levier (12, 100) de l'appui étanche sur le couvercle ou sur le récipient lors de l'abaissement du couvercle en direction du récipient, le couvercle ou le récipient effectuant un déplacement ultérieur du couvercle en position d'ouverture, caractérisé en ce qu'entre la lèvre d'étanchéité (7, 21, 64) et le couvercle (2, 18) ou le récipient (1, 17, 50) est agencé radialement à l'extérieur du bord de la lèvre d'étanchéité (7, 21, 64) un élément de glissement annulaire (12, 100) constitué par un matériau qui donne avec le récipient ou avec le couvercle un appariement à glissement présentant un faible coefficient de frottement et qui forme l'appui de levier.

2. Marmite à pression suivant la revendication 1, caractérisée en ce que l'élément de glissement annulaire (12, 100) est agencé le long du bord total (9, 50 ou 10) du récipient (1, 50) et/ou du couvercle (2, 18).

3. Marmite à pression suivant l'une ou l'autre des revendications 1 et 2, caractérisée en ce que l'élément de glissement (12, 100) présente une section transversale circulaire.

4. Marmite à pression suivant l'une quelconque des revendications 1 à 3, caractérisée en ce que le joint d'étanchéité (11, 60) est constitué par un élastomère de caoutchouc nitrile (élastomère NBR) ou par un caoutchouc de silicone et en ce que l'élément de glissement est constitué par un acier inoxydable ou par une matière synthétique.

5. Marmite à pression suivant l'une quelconque des revendications 1 à 4, caractérisée en ce que l'élément de glissement est intégré dans le joint d'étanchéité.

6. Marmite à pression suivant l'une quelconque des revendications 1 à 5, caractérisée en ce que la surface de l'élément de glissement (12, 100) est organisée en saillies en forme de bandes ou de points.

7. Marmite à pression suivant l'une quelconque des revendications 1 à 6, caractérisée en ce que l'élément de glissement (12, 100) est agencé radialement à l'extérieur d'ouvertures (70, 31) qui sont prévues dans le bord de récipient (56) ou dans le couvercle (2) et qui sont disposées radialement à l'extérieur de l'arête libre extrême de la lèvre d'étanchéité associée (64).

8. Marmite à pression suivant l'une quelconque des revendications 1 à 7, caractérisé en ce que l'élément de glissement (100) est en prise, par des saillies (68) qui s'étendent vers l'extérieur, dans des rainures (58) du couvercle (52).

9. Marmite à pression suivant l'une quelconque des revendications 1 à 8 caractérisée en ce qu'un élément d'appui plat est agencé entre les lèvres d'étanchéité (62, 64).

10. Marmite à pression suivant la revendication 1, caractérisée en ce que l'élément de glissement est constitué par une déformation, à la manière d'un appui de levier, du couvercle ou du bord de récipient.

11. Marmite à pression suivant l'une quelconque des revendications 1 à 10, caractérisé en ce que l'élément de glissement (12, 100) est pourvu d'évidements (66) sur son côté opposé à la lèvre d'étanchéité (64) associée.

**Claims**

1. Steam pressure ccooker comprising a container (1; 17; 50) to accommodate comestibles to be cooked, a lid (2; 18) with safety valve to be positioned thereon, a closure device securing container and lid in a closed position relatively to one another and a seal arranged between lid and container and by which, in the closed position, the interior of the container is safeguarded against a fall in pressure, a radially inwardly extending seal (7; 21; 64) of the seal bearing on the lid or on the container, which lip, when the lid is pressed down in the direction towards the container, is lifted by means of a lever-like element (12; 100) from the sealing position on the lid or on the container, and the lid or container, with the subsequent movement of the lid into the opening position, carries out a movement relatively to the sealing lip, characterised in that, between the sealing lip (7; 21; 64) and the lid (2; 18) or the container (1; 17; 50), a ring-like sliding element (12; 100) is arranged radially outside the rim of the sealing lip (7; 21; 64), which element consists of a material which, with the container and lid, respectively, provides a sliding pair of low frictional value and forms the lever bearing.

2. Steam pressure cooker according to claim 1, characterised in that the annular sliding element (12; 100) is arranged along the entire rim (9; 50 or 10) of the container (1; 50) and/or of the lid (2; 18).

3. Steam pressure cooker according to claim 1 or 2, characterised in that the sliding element (12; 100) has a circular cross-section.

4. Steam pressure cooker according to one of the claims 1 to 3, characterised in that the seal (11; 60) consists of a nitrile-rubber elastomer, (NBr elastomer) or silicone rubber and the sliding element consists of stainless steel or synthetic plastics.

5. Steam pressure cooker according to one of the claims 1 to 4, characterised in that the sliding element is integrated into the seal or packing.

6. Steam pressure cooker according to one of the claims 1 to 5, characterised in that the surface of the sliding element (12; 100) is resolved into strip-like or punctiform projections.

7. Steam pressure cooker according to one of claims 1 to 6, characterised in that the sliding element (12; 100) is arranged radially outside openings (70; 31) provided in the container rim (56) or in the lid (2), said openings lying radially outside the free end edge of the associated sealing lip (64).

8. Steam pressure cooker according to one of the claims 1 to 7, characterised in that the sliding element (100) engages with outwardly projecting lugs (68) in slots (58) of the lid (52).

9. Steam presure cooker according to one of claims 1 to 8, characterised in that a flat support element (72) is arranged between the sealing lips (62; 64).

10. Steam pressure cooker according to claim 1, characterised in that the sliding element consists of a lever-like shaping of the lid or of the rim of the container.

11. Steam pressure cooker according to one of the claims 1 to 10, characterised in that the sliding element (12; 100) is provided with recesses (66) on its side further from the associated sealing lip (64).

EP 0 247 406 B1

Fig.1

1

Fig.2

Fig.3

Fig. 4

EP 0 247 406 B1

Fig.5

Fig.6

EP 0 247 406 B1

# Fig.7

Fig.8

Fig.9

Fig.10

52

62

64

60

72

58

68

100

50

(A-B)

(C-D)

70

EP 0 247 406 B1

Fig.11

EP 0 247 406 B1

Fig. 12

100
52
58
66
50
70
(A-B)
(C-D)